# EUROPÄISCHE PATENTANMELDUNG

(11) **EP 1 825 751 A2**
(43) Veröffentlichungstag der Anmeldung: **29.08.2007**
(21) Anmeldenummer: 07004029.0
(22) Anmeldetag: 27.02.2007
(51) Int. Cl.: A01N 35/02, A01N 33/12, A01N 25/30, A01P 1/00

(54) **Desinfektionsmittel enthaltend Glutardialdehyd und quaternäre Ammoniumverbindungen und dessen Verwendung**

(30) Priorität: 27.02.2006 DE 102006009508
(71) Anmelder: Gerhard Ruff GmbH, 87700 Memmingen (DE)
(72) Erfinder: Dückminor, Harald, 87700 Memmingen (DE); Wanke, Erich, 87734 Benningen (DE); Krämer, Albrecht, Dr., 68782 Brühl (DE)
(74) Vertreter: Müller, Frank Peter

(57) **Zusammenfassung**

Die vorliegende Erfindung betrifft eine Desinfektionsmittel-Zusammensetzung auf Basis von Glutardialdehyd und quaternären Ammoniumverbindungen sowie deren Verwendung insbesondere zur Flächendesinfektion.

## Beschreibung

Gegenstand der vorliegenden Erfindung ist eine Desinfektionsmittel-Zusammensetzung enthaltend Glutardialdehyd und quaternäre Ammoniurnverbindungen (QAV) sowie die Verwendung der Zusammensetzung.

Es sind zahlreiche Desinfektionsmittel für die Flächendesinfektion bekannt. Die in niedrigen Konzentrationen wirksamen Formulierungen enthalten jedoch meist Formaldehyd oder Peressigsäure. Formaldehyd steht im Verdacht, kanzerogen zu sein; Peressigsäure birgt, durch ihren sauren Charakter die Gefahr, korrosiv auf behandelte Oberflächen zu wirken und ist zudem durch einen stechenden Geruch nicht beliebig einsetzbar.

Aufgabe der vorliegenden Erfindung ist die Bereitstellung einer hochwirksamen Desinfektionsmittel-Zusammensetzung mit sehr guter viruzider Wirksamkeit bei gleichzeitig bakteriostatischer Wirkung unter Vermeidung des Einsatzes von Formaldehyd und/oder Peressigsäure.

Erfindungsgemäß wird diese Aufgabe durch die Desinfektionsmittel-Zusammensetzung nach Patentanspruch 1 bzw. die Verwendung nach den Patentansprüchen 10 bis 12 gelöst. Bevorzugte Ausführungsformen sind Gegenstand der Unteransprüche oder nachfolgend beschrieben.

Es wurde überraschenderweise gefunden, dass eine Desinfektionsmittel-Zusammensetzung auf Basis einer Kombination von Glutaraldeyhd (CAS No.: 111-30-8, Chemische Formal OCH(CH₂)₃CHO, anderer Name: Pentan-1,5-dialdehyd) und zumindest einer QAV insbesondere des Typs Di(C6- bis C14-)-alkyldimethylammoniumchlorid (die beiden Alkyl-Gruppen können auch unterschiedlich sein) und weiterer Komponenten eine sehr gute viruzide Wirksamkeit aufweist und dabei auf den Einsatz von Formaldehyd verzichtet werden kann.

Der eingesetzte pH-Regulator kann gleichzeitig als Sequestriermittel wirken (und umgekehrt) wie dies für die erfindungsgemäß eingesetzten Phosphonsäure-Verbindungen der Fall ist. Die Einsatzmengen, die für den pH-Regulator und/oder das Sequestriermittel vorgesehen sind, entsprechen vorzugsweise den Einsatzmengen an Phosphonsäure-Verbindung.

Die Verwendung erfolgt in den unterschiedlichsten Anwendungsgebieten jedoch vorzugsweise zur Flächendesinfektion und insbesondere im Veterinärbereich zur Stalldesinfektion, hier auch zur Prävention bzw. Desinfektion für Vogelgrippeviren.

Nachfolgende Beispiele und Tabellen dienen der Erläuterung der vorliegenden Erfindung und dem Nachweis der Wirksamkeit der beanspruchten Desinfektionsmittel-Zusammensetzung ohne die Erfindung auf diese zu beschränken.

### Beispiel 1:

| Inhaltsstoff | Gew. % |
|---|---|
| Glutardialdehyd | 24,5 |
| Isopropylalkohol | 10,0 |
| Didecyldimethylammoniumchlorid | 8,0 |
| Alkylpolyglykolether | 3,2 |
| Phosphonsäure | 1,0 |
| Wasser entsalzt | 53,3 |

### Beispiel 2 (Vergleichsbeispiel):

| Inhaltsstoff | Gew.% |
|---|---|
| Glutardialdehyd | 22,5 |
| Formaldehyd | 16,7 |
| Alkylbenzyldimethylammoniumchlorid | 3,0 |
| Wasser entsalzt | 57,8 |

Zum Nachweis der sehr guten viruziden Wirksamkeit diente als Prüfkriterium das unbehüllte ECBO-Virus. Prüfverfahren und Methode wurde gemäß den "Richtlinien für die Prüfung chemischer Desinfektionsmittel" (Stand 2000) der Deutschen Veterinärmedizinischen Gesellschaft für den Bereich Tierhaltung, Gießen, durchgeführt.

Es wurde der Keimträgertest Holz durchgeführt. Die Einwirkzeit betrug 120 Minuten.

Die Desinfektionsmittel-Zusammensetzung ist als ausreichend wirksam zu bewerten, wenn kein Restvirus mehr nachweisbar ist.

Aus Tabelle 1 folgt, dass Beispiel 1 eine mit Beispiel 2 vergleichbare Wirksamkeit aufweist, jedoch kein Formaldehyd enthält.

**Tabelle 1**

| ECBO-Virus | | | | |
|---|---|---|---|---|
| Muster | Kontrolle (log₁₀ TCA₅₀/mL) | Konzentrationen (%) | | |
| | | 0,5 | 1,0 | 2,0 |
| Beispiel 1 | 5,3/5,6/5,6 | + + + | - - - | - - - |
| Beispiel 2 | 6,25/6,0 | + + | - - | - - |

| | | | | |
|---|---|---|---|---|
| + = Restvirus nachweisbar, - = Restvirus nicht nachweisbar | | | | |

Die Bestimmung der bakteriziden und fungiziden Wirkung der erfindungsgemäßen Zusammensetzung (Beispiel 1) enthaltend Amino(trismethylenphosphonsäure) im Keimträgerversuch erfolgte im Weiteren nach der in den DVG-Richtlinien unter IV.A.4 angegebenen Methode. Die Ergebnisse dieser Prüfung sind in Tabelle 2 dargestellt (jeweils zwei Versuche). Das geprüfte Präparat zeigt eine deutlich ausgeprägtere bakteriostatiscbe Wirkung als Phenol gegenüber allen Prüfkeimen. Das Präparat wirkt in moderaten Konzentrationen sicher im Keimträgerversuch und ist insbesondere für die Anwendung auf rauen Flächen, wie sie im Stall anzutreffen sind, geeignet.

**Tabelle 2**

| Bakterizidie- und Fungizidie-Prüfung im Keimträgertest bei 20°C | | | | | | | |
|---|---|---|---|---|---|---|---|
| **(I und II = unabhängige Ansätze)** | | | | | | | |
| **Prüfstämme** | **Konz.** | **30 min** | | **60 min** | | **120 min** | |
| | **Vol%** | **I** | **II** | **I** | **II** | **I** | **II** |
| ***S. aureus*** Keimzahl/ml 17,0x10⁸ II 6.4 x 10⁸ | 0,25 | - | - | - | - | - | - |
| | Fo.3% | + | + | - | - | - | - |
| ***E. faecium*** Keimzahl/ml I 5,0x10⁸ II 4,8x10⁸ | 2,5 | - | - | - | - | - | - |
| | 2,0 | + | - | - | - | - | - |
| | 1,5 | + | + | - | - | - | - |
| | Fo.3% | + | + | - | - | - | - |
| ***P. mirabilis*** Keimzahl/ml I 3,5x10⁸ II 3,0x10⁸ | 2,0 | - | - | - | - | - | - |
| | 1,5 | + | + | - | - | - | - |
| | 1,0 | + | + | + | - | - | - |
| | Fo. 3% | + | + | - | - | - | - |
| ***Ps. aeruginosa*** Keimzahl/ml I 7,5x10⁸ *II* 6,1 x 10⁸ | 1,5 | - | - | - | - | - | - |
| | 1,0 | + | - | - | - | - | - |
| | 0,75 | + | + | + | +- | - | - |
| | Fo. 3% | + | + | - | - | - | - |
| ***C. albicans*** Keimzahl/ml I 3,1x10⁸ *II* 1,8 x 10⁸ | 2,5 | - | - | - | - | - | - |
| | 2,0 | - | + | - | - | - | - |
| | Fo. 3% | - | - | - | - | - | - |

| | | | | | | | |
|---|---|---|---|---|---|---|---|
| - = *kein Wachtstum nach Bebrütung im Nährmedium* *Fo* = *Formaldehyd als Vergleich* | | | | | | | |

## Patentansprüche

1. Desinfektionsmittel-Zusammensetzung enthaltend neben Wasser,
a) Glutardialdehyd,
b) zumindest eine quaternäre Ammoniumverbindung,
c) nichtionisches Tensid,
d) Alkohol als Lösungsmittel und/oder Lösungsvermittler und einen
e) pH-Regulator zur Herstellung eines pH-Wertes von kleiner 6 und/oder ein Sequestriermittel.
wobei der pH-Regulatox bzw. das Sequestriermittel eine Phosphonsäure-Verbindung ist bzw. umfasst und die Zusammensetzung kleiner 1 Gew.% oder kein Formaldehyd enthält.

2. Desinfektionsmittel-Zusammensetzung nach zumindest einem der vorhergehenden Ansprüche, **dadurch gekennzeichnet, dass** die quaternäre Ammoniumverbindung ein Di- (C6- bis C14-Alkyl)-dimethylammoniumchlorid ist, insbesondere Didecyldimethylammoniumchlorid oder Dioctyldimethylammoniumchlorid.

3. Desinfektionsmittel-Zusammensetzung nach zumindest einem der vorhergehenden Ansprüche, **dadurch gekennzeichnet, dass** das nichtionische Tensid ein C6- bis C32- Fettalkoholpoly(C2- bis C4-)alkylenglykol ist, insbesondere ein C8- bis C14-Alkylpolyethylenglykolether mit 3 bis 11 EO-Gruppen aufweisend eine freie HydroxyGruppe pro Molekül.

4. Desinfektionsmittel-Zusammensetzung nach zumindest einem der vorhergehenden Ansprüche, **dadurch gekennzeichnet, dass** die Phosphonsäure-Verbindung Amino(trismethylenphosphonsäure), Phosphonobutantricarbonsäure und/oder Hydroxyethylidendiphosphonsäure, insbesondere Amino(trismethylenphosphonsäure) und/oder Hydroxyethylidendiphosphonsäure ist.

5. Desinfektionsmittel-Zusammensetzung nach zumindest einem der vorhergehenden Ansprüche enthaltend
a) 5 bis 50 Gew.%, vorzugsweise 10 bis 25 Gew.%, besonders bevorzugt 22 bis 25 Gew.%, Glutardialdehyd,
b) 2 bis 20 Gew.%, vorzugsweise 4 bis 10 Gew.%, besonders bevorzugt 5 bis 8 Gew.%, quaternäre Ammoniumverbindung,
c) 1 bis 10 Gew.%, vorzugsweise 2 bis 5 Gew.%, besonders bevorzugt 3 bis 4 Gew.%, nichtionisches Tensid,
d) 3 bis 30 Gew.%, vorzugsweise 6 bis 15 Gew.%, besonders bevorzugt 8 bis 12 Gew.%, Alkohol,
e) 0,1 bis 5 Gew.%, vorzugsweise 0,2 bis 2,5 Gew.%, besonders bevorzugt 0,5 bis 1,5 Gew.%, Sequestriermittel bzw. pH-Regulator,
wobei vorzugsweise kleiner 5 Gew.% weitere Bestandteile in der Zusammensetzung enthalten sind, abgesehen von ggf. Wasser.

6. Desinfektionsmittel-Zusammensetzung nach zumindest einem der vorhergehenden Ansprüche enthaltend
a) 22 bis 25 Gew.% Glutardialdehyd,
b) 4 bis 10 Gew.-% , insbesondere 5 bis 8 Gew.%, quaternäre Ammoniumverbindung,
c) 1 bis 10 Gew.% , insbesondere 3 bis 4 Gew.%, nichtionisches Tensid,
d) 6 bis 15 Gew% , insbesondere 8 bis 12 Gew.%, Alkohol,
e) 0,2 bis 2,5 Gew.%, insbesondere 0,5 bis 1,5 Gew.%, Sequestriermittel bzw. pH-Regulator,
wobei vorzugsweise kleiner 5 Gew.% weitere Bestandteile in der Zusammensetzung enthalten sind, abgesehen von ggf. Wasser.

7. Desinfektionsmittel-Zusammensetzung nach zumindest einem der vorhergehenden Ansprüche, **dadurch gekennzeichnet, dass** diese
a) Glutardialdehyd
b) Didecyldimethylammoniumchlorid,
d) 2-Propanol, und
e) Amino(trismethylenphosphonsäure) und/oder
f) Hydroxyethylidendisphosphonsäure und/oder Hydroxyethylidendiphosphonsäure
enthält.

8. Desinfektionsmittel-Zusammensetzung nach zumindest einem der vorhergehenden Ansprüche, **dadurch gekennzeichnet, dass** diese kein Formaldehyd und/oder Peressigsäure enthält.

9. Wässriges verdünntes Desinfektionsmittel, **dadurch gekennzeichnet, dass** das Desinfektionsmittel 0,5 und 10 Gew.-%, insbesondere 0,5 bis kleiner 2 Gew.% der Desinfektionsmittel-Zusammensetzung nach Anspruch 5 oder 6 in wässriger Verdünnung enthält.

10. Verwendung der Desinfektionsmittel-Zusammensetzung nach zumindest einem der Ansprüche 1 bis 8 bzw. des wässrigen verdünnten Desinfektionsmittels nach Anspruch 9 zur Flächendesinfektion, insbesondere zur Bekämpfung pathogener Erreger auf Flächen, insbesondere Viren.

11. Verwendung der Desinfektionsmittel-Zusammensetzung nach zumindest einem der Ansprüche 1 bis 8 bzw. des wässrigen verdünnten Desinfektionsmittels nach Anspruch 9 zur Bekämpfung pathogener Erreger, insbesondere Viren wie VogelgrippeViren, jeweils im Veterinärbereich.

12. Verwendung der Desinfektionsmittel-Zusammensetzung nach zumindest einem der Ansprüche 1 bis 8 bzw. des wässrigen verdünnten Desinfektionsmittels nach Anspruch 9 als Stalldesinfektionsmittel.
